# FASCICULE DE BREVET EUROPEEN

(11) **EP 4 593 101 B1**
(45) Date de publication et mention de la délivrance du brevet: **01.04.2026**
(21) Numéro de dépôt: 25154014.2
(22) Date de dépôt: 27.01.2025
(51) Int. Cl.: H01M 4/04, H01M 4/131, H01M 4/505, H01M 4/58, H01M 4/136, H01M 4/1391, H01M 4/1397, B01J 2/00, C09D 5/24

(54) **PROCÉDÉ DE PRÉPARATION D'UN MATÉRIAU DE CATHODE POUR BATTERIE**
VERFAHREN ZUR HERSTELLUNG EINES KATHODENMATERIALS FÜR EINE BATTERIE
METHOD FOR PREPARING CATHODE MATERIAL FOR BATTERY

(30) Priorité: 29.01.2024 FR 2400824
(43) Date de publication de la demande: 30.07.2025
(73) Titulaire: Commissariat à l'Energie Atomique et aux Energies Alternatives, 75015 Paris (FR)
(72) Inventeur: COGNIARD, Mathieu, 38054 Grenoble Cedex 09 (FR); BIECHER, Yohan, 38054 Grenoble Cedex 09 (FR); COLIN, Jean-François, 38054 Grenoble Cedex 09 (FR)
(74) Mandataire: Santarelli

(56) Documents cités:
- WO-A1-2014/140323
- WO-A1-2022/121570
- CN-A- 102 187 502
- CN-A- 116 779 844
- KR-A- 20170 111 740
- US-B2- 9 543 574
- WOOD MARISSA ET AL: "Exploring the relationship between solvent-assisted ball milling, particle size, and sintering temperature in garnet-type solid electrolytes", JOURNAL OF POWER SOURCES, ELSEVIER, AMSTERDAM, NL, vol. 484, 8 December 2020 (2020-12-08) - 8 December 2020 (2020-12-08), XP086424231, ISSN: 0378-7753, [retrieved on 20201208], DOI: 10.1016/J.JPOWSOUR.2020.229252
- KONAROVA M ET AL: "Physical and electrochemical properties of LiFePO"4 nanoparticles synthesized by a combination of spray pyrolysis with wet ball-milling", JOURNAL OF POWER SOURCES, ELSEVIER, AMSTERDAM, NL, vol. 194, no. 2, 1 December 2009 (2009-12-01) - 1 December 2009 (2009-12-01), pages 1029 - 1035, XP026499695, ISSN: 0378-7753, [retrieved on 20090624], DOI: 10.1016/J.JPOWSOUR.2009.06.046

## Description

La présente invention s'inscrit dans le domaine de la fabrication de cathodes pour batteries.

Plus particulièrement, la présente invention concerne un procédé de préparation d'un matériau de cathode pour batterie, ainsi qu'un procédé de fabrication d'une cathode pour batterie mettant en œuvre un tel procédé.

Un domaine d'application particulier de l'invention, bien que n'en étant nullement limitatif, est celui de la préparation de matériaux de cathode pour batteries de type lithium-ion, en particulier de la catégorie des oxydes riches en lithium à structure de sel gemme désordonnée. De tels matériaux, qui seront désignés dans la présente description par l'abréviation DRS, pour l'anglais « disordered rocksalt oxide », comprennent généralement du lithium, un ou plusieurs métaux de transition et de l'oxygène, le site de l'oxygène pouvant être dopé, par exemple par du fluor, pour améliorer la performance électrochimique du matériau. De tels matériaux répondent notamment à la formule générale (I) :

LiₓM¹_{y}M²_{z}O₃₋ᵤFᵤ (I)

dans laquelle x est supérieur à 1 et inférieur à 3, y est compris entre 0 et 1, z est compris entre 0 et 1, x, y et z étant tels que x+y+z = 3,
u est compris entre 0 et 1,
M¹ représente un premier métal de transition, tel que le manganèse Mn, le fer Fe, le vanadium V ou le molybdène Mo,
et M² représente un deuxième métal de transition différent dudit premier métal de transition, tel que le niobium Nb ou le titane Ti.

Parmi ces matériaux, ceux présentant un taux de fluor élevé, pour lesquels, dans la formule générale (I), u est supérieur ou égal à 0,3, s'avèrent particulièrement avantageux sur le plan de la performance électrochimique. La technique la plus utilisée pour la synthèse de ces matériaux est la mécanosynthèse, selon laquelle des précurseurs appropriés du matériau, tels que LiF, Li₂CO₃, Li₂O, Mn₂O₃, TiO₂, Nb₂O₅, etc., sont broyés pendant plusieurs dizaines d'heures à haute vitesse dans un broyeur planétaire, afin de former une phase de type sel gemme désordonnée.

Contrairement aux matériaux de cathode lamellaires tels que LiNiₓMn_{y}Co_{z}O₂ (NMC), la structure cubique désordonnée permet de s'affranchir de l'utilisation de cobalt et de nickel, abaissant considérablement le coût de production du matériau, tout en conservant des performances intéressantes.

Lorsqu'ils sont mis en œuvre en tant que matériau de cathode dans une cellule électrochimique, les matériaux DRS riches en lithium présentent une capacité expérimentale supérieure à 250 mAh/g, à un potentiel de décharge proche de 3,4 V, ce qui conduit à une densité d'énergie de l'ordre de 900 Wh/kg à l'échelle du matériau. A l'échelle d'une cellule complète, une densité d'énergie équivalente ou supérieure à celle du matériau de type lithium-fer-phosphate (LFP), c'est-à-dire 240 Wh/kg, est avantageusement envisageable. Le matériau répondant à la formule Li₂MnO₂F, en particulier, est l'un des matériaux les plus prometteurs parmi les DRS synthétisés par mécanosynthèse, car délivrant une capacité de l'ordre de 270 mAh/g.

Toutefois, la technique de mécanosynthèse ne permet pas de contrôler la morphologie des particules de matériau qu'elle permet d'obtenir. Cette morphologie est inhomogène, avec une distribution de taille de particules multimodale. Cette morphologie des particules du matériau post-synthèse ne permet pas d'obtenir des performances électrochimiques convenables. En outre, elle complique la mise en œuvre du matériau pour la fabrication de cathode, car elle induit la formation de grains durant l'étape d'enduction du collecteur de courant par le matériau.

Pour remédier à ces inconvénients, il a été proposé par l'art antérieur de réduire par broyage la taille des particules obtenues à l'issue du procédé de mécanosynthèse, à une valeur nanométrique, inférieure à 1000 nm. Toutefois, deux verrous limitent l'utilisation de tels matériaux sous forme pulvérisée dans des systèmes électrochimiques complets :
- la tenue en cyclage est relativement faible du fait de phénomènes néfastes se produisant en surface de la cathode, tels que la dégradation de l'électrolyte et la densification de cette surface ;
- la densité d'énergie gravimétrique est très diminuée à l'échelle de la cellule électrochimique.

Ainsi, la morphologie pulvérisée des matériaux conduit à une réactivité accrue, et à une perte d'énergie au niveau de la cellule électrochimique.

Les documents WO 2022/121570, CN 102187502, CN 116779844 et US 9543574 décrivent des matériaux de cathode sous forme de particules secondaires formées d'une agglomération d'une pluralité de particules primaires. Les documents WO 2014/140323 et KR 2017 0111740 décrivent également des matériaux de cathode sous forme de particules secondaires formées d'une agglomération d'une pluralité de particules primaires, qui sont obtenus par des procédés comprenant une étape de granulation par broyage des particules primaires dans, respectivement, de l'eau pour le premier, et un solvant organique tel qu'une cétone ou un alcool optionnellement en mélange avec l'eau pour le second. Aucun de ces procédés ne permet toutefois d'obtenir des particules secondaires de distribution de taille sensiblement monomodale.

La présente invention vise à proposer un procédé de préparation d'un matériau de cathode pour batterie, en particulier du type DRS riche en lithium, notamment à taux de fluor élevé, qui permette d'obtenir un matériau de cathode sous forme particulaire présentant à la fois une bonne performance électrochimique, en particulier une bonne tenue en cyclage, une faible réactivité vis-à-vis de l'air ambiant et de l'électrolyte utilisé dans la cellule électrochimique, une densité d'énergie élevée et une morphologie monomodale contrôlée.

Des objectifs supplémentaires de l'invention sont que ce procédé soit facile à mettre en œuvre, qui plus est au moyen d'appareillage couramment disponible dans les sites de production de matériaux de cathodes pour batteries, et que le matériau qu'il permet d'obtenir soit facile à mettre en forme d'électrode, en particulier par un procédé d'enduction classique en lui-même.

Il maintenant été découvert par les présents inventeurs que ces objectifs peuvent être atteints par un procédé comprenant une étape de granulation du matériau sous forme pulvérisée ayant été obtenu par les méthodes classiques proposées par l'art antérieur, cette étape de granulation étant réalisée dans des conditions spécifiques selon la revendication 1.

Ainsi, selon un premier aspect, il est proposé selon la présente invention un procédé de préparation d'un matériau de cathode pour batterie / accumulateur, en particulier, mais non limitativement, de type au lithium-ion. Ce procédé comprend :
- l'obtention dudit matériau de cathode sous forme d'un mélange de particules dudit matériau, dites particules primaires, de distribution de taille sensiblement monomodale et de diamètre moyen en volume, déterminé par diffraction laser, inférieur ou égal à 2 µm, de préférence inférieur ou égal à 1 µm et préférentiellement inférieur ou égal à 600 nm,
- ensuite, une étape de mise en forme de ce mélange de particules primaires par granulation par broyage dans un broyeur à billes, dans un mélange de solvants organiques comprenant un solvant organique polaire et un solvant organique apolaire, ledit solvant organique polaire et ledit solvant organique apolaire étant non miscibles.

Préférentiellement, le procédé selon l'invention comprend des étapes finales de séchage des particules formées, par exemple par évaporation sous vide des solvants organiques présents dans le milieu, puis de séparation du matériau particulaire obtenu et des billes utilisées pour le broyage, par exemple par tamisage.

L'étape de mise en forme du procédé selon l'invention permet avantageusement de former un mélange de particules, dites particules secondaires, de forme sphéroïdale, de distribution de taille sensiblement monomodale et de diamètre moyen en volume compris entre 1 et 50 µm, chacune de ces particules secondaires étant un agglomérat d'une pluralité desdites particules primaires, et présentant une densité tapée supérieure, et une surface spécifique inférieure, à ces dernières.

On ne préjugera pas ici des mécanismes sous-tendant l'occurrence d'une agglomération contrôlée des particules primaires du matériau sous forme de sphères de taille homogène lors de la réalisation de l'étape de mise en forme du procédé selon l'invention. On peut toutefois penser que, lors du broyage dans le mélange de solvants organiques non miscibles, il se forme une émulsion dans le milieu, des gouttelettes du solvant polaire étant dispersées dans le solvant apolaire. Le piégeage des particules primaires solides à l'intérieur de ces gouttelettes du solvant polaire provoquerait alors leur agglomération sous forme de sphères de taille sensiblement uniforme.

Le procédé selon l'invention permet avantageusement, par un choix adéquat des conditions opératoires mises en œuvre lors de l'étape de mise en forme, de contrôler la taille des particules secondaires formées.

Ces conditions opératoires peuvent notamment être choisies pour obtenir un mélange de particules secondaires de diamètre moyen en volume inférieur ou égal à 20 µm, facilitant leur mise en forme d'électrode par un procédé d'enduction conventionnel.

Le diamètre moyen en volume d'un mélange de particules, également nommé D[4,3], est défini dans la présente description de manière classique en elle-même, comme la taille moyenne des particules pondérée par leur volume. Ce paramètre peut notamment être déterminé par analyse du mélange particulaire par la technique de diffraction laser, en analysant la diffraction de la lumière laser par les particules en suspension dans un liquide ou un gaz, au moyen de tout granulomètre à diffraction laser usuel, par exemple de type Malvern Mastersizer. L'analyse peut par exemple être réalisée en voie liquide, en particulier sur une dispersion des particules dans l'eau, un alcool ou tout autre solvant, par exemple à une concentration d'environ 0,01 à 0,1 mg/ml, cette dispersion pouvant optionnellement avoir été soumise à un traitement par ultrasons, par exemple pendant 1 minute, par exemple à une température de 25°C, préalablement à l'analyse.

Comme indiqué ci-avant, l'agglomération des particules primaires du matériau de cathode, lors de la mise en œuvre de l'étape de mise en forme du procédé selon l'invention, permet de réduire la surface spécifique du matériau et ainsi limiter sa réactivité vis-à-vis du milieu environnant, notamment de l'atmosphère ambiante et de l'électrolyte lorsqu'il est utilisé au sein d'une cellule électrochimique.

Le matériau de cathode sous sa forme obtenue à l'issue du procédé selon l'invention présente en outre une densité tapée élevée, si bien que sa densité d'énergie à l'échelle de la cellule d'une batterie dans laquelle il est mis en œuvre est bien supérieure à celle obtenue pour le mélange de particules primaires initial.

Les particules secondaires obtenues à l'issue du procédé sont avantageusement moins volatiles que les particules primaires initiales, et donc plus simples à manipuler.

Le matériau sous sa forme telle qu'obtenue à l'issue du procédé selon l'invention présente en outre une bonne tenue en cyclage, et, de manière générale, une bonne performance électrochimique.

Le procédé selon l'invention peut en outre répondre à l'une ou plusieurs des caractéristiques décrites ci-après, mises en œuvre isolément ou en chacune de leurs combinaisons techniquement opérantes.

L'étape d'obtention du matériau de cathode sous forme d'un mélange de particules primaires, chacune étant constituée dudit matériau, de distribution de taille monomodale et de diamètre moyen en volume inférieur ou égal à 2 µm, peut être réalisée de toute manière conventionnelle.

En fonction du matériau particulier, ce mélange de particules primaires peut par exemple être obtenu dans le commerce. Autrement, il peut autrement être synthétisé à partir de précurseurs du matériau, notamment par la technique de mécanosynthèse, de manière classique en elle-même notamment par broyage des précurseurs appropriés, tels que LiF, Li₂CO₃, Li₂O, Mn₂O₃, TiO₂, Nb₂O₅, etc., pendant plusieurs dizaines d'heures à haute vitesse, par exemple supérieure à 400 tours/min, dans un broyeur à billes, par exemple un broyeur planétaire. Lorsque le matériau particulaire obtenu à l'issue de l'étape de synthèse, notamment mécanosynthèse, présente une distribution de taille multimodale et/ou un diamètre moyen en volume supérieur à 2 µm, le procédé selon l'invention comprend de préférence une étape additionnelle de réduction de taille des particules.

Ainsi, dans des modes de mise en œuvre particuliers de l'invention, particulièrement adaptés aux matériaux dits DRS riches en lithium, l'étape d'obtention du matériau de cathode sous forme d'un mélange de particules primaires de distribution de taille monomodale et de diamètre moyen en volume inférieur ou égal à 2 µm, comprend :
- une étape de formation de particules du matériau par mécanosynthèse, puis,
- une étape de réduction de taille des particules ainsi formées, pour obtenir le mélange visé de particules primaires de distribution de taille monomodale et de diamètre moyen en volume inférieur ou égal à 2 µm.

L'étape de réduction de taille des particules peut être réalisée par toute méthode connue de l'homme du métier. Elle peut notamment être réalisée par broyage, par exemple dans un broyeur / agitateur à billes, tel qu'un broyeur planétaire. Il entre dans les compétences de l'homme du métier de choisir les paramètres opératoires d'une telle étape selon la distribution granulométrique spécifiquement visée. En particulier, le broyage peut être réalisé dans un solvant polaire, de préférence aprotique, tel que l'acétonitrile, ou dans un solvant apolaire, tel que le cyclohexane.

L'ensemble de ces étapes est de préférence réalisé sous atmosphère inerte, par exemple sous atmosphère d'argon.

L'étape de mise en forme du procédé selon l'invention est également de préférence réalisée sous atmosphère inerte, par exemple sous atmosphère d'argon.

Elle peut être réalisée dans tout broyeur / agitateur à billes classique en lui-même, par exemple un broyeur planétaire ou un broyeur centrifuge, muni d'un bol de broyage en matière inerte, telle que la zircone, et de billes de broyage également formées en matière inerte, telle que la zircone.

Le diamètre des billes de broyage peut être compris entre 3 et 10 mm, par exemple être égal à 3 mm, 5 mm ou 10 mm.

Les solvants du mélange de solvants organiques mis en œuvre dans cette étape de mise en forme sont de préférence choisis pour être inertes vis-à-vis du matériau de cathode. Pour la plupart des matériaux de cathode usuels, ceci implique que ces solvants organiques soient de type aprotique. Ainsi, dans des modes de réalisations particuliers de l'invention, l'ensemble des solvants du mélange de solvants organiques mis en œuvre selon l'invention sont aprotiques. Le caractère polaire ou apolaire d'un solvant organique est ici défini de manière classique en elle-même, en relation avec la constante diélectrique de la molécule concernée. Ainsi, on entend dans la présente description, par solvant apolaire, un solvant dont la constante diélectrique est inférieure à 5. On entend, par solvant polaire, un solvant dont la constante diélectrique est supérieure ou égale à 5.

Dans des modes de mise en œuvre particuliers de l'invention, le solvant apolaire est choisi parmi les hydrocarbures, en particulier en C5-C7, de préférence parmi les hydrocarbures acycliques, tels que le pentane, l'hexane ou l'heptane, et les hydrocarbures alicycliques, tels que le cyclohexane ou le cyclopentane.

Le mélange de solvants organiques peut contenir un ou plusieurs solvants organiques apolaires, chacun pouvant notamment être tel que défini ci-dessus. Le mélange de solvants organiques peut en outre contenir un ou plusieurs solvants polaires. Chacun de ces solvants polaires est alors de préférence de type aprotique.

Dans des modes de mise en œuvre préférés de l'invention, au moins un solvant polaire du mélange de solvants organiques est l'acétonitrile. Par exemple, l'acétonitrile est le seul solvant polaire du mélange de solvants organiques.

Le mélange de solvants organiques mis en œuvre selon l'invention contient de préférence, et est préférentiellement constitué de, d'une part l'acétonitrile, et d'autre part le cyclohexane, l'hexane ou l'heptane.

Le rapport volumique entre le solvant apolaire, ou l'ensemble des solvants apolaires le cas échéant, et le solvant polaire, ou l'ensemble des solvants polaires le cas échéant, est de préférence compris entre 6 et 11, et préférentiellement compris entre 7 à 10. Une telle caractéristique assure avantageusement une bonne maitrise de la morphologie des particules secondaires obtenues à l'issue de l'étape de mise en forme, et notamment l'obtention d'une morphologie de type sphéroïdale, ainsi qu'un bon contrôle de la taille de ces particules secondaires.

Une taille des particules secondaires particulièrement adaptée à une utilisation pour la fabrication d'une cathode est en outre obtenue par mise en œuvre d'un ou plusieurs, de préférence l'ensemble, des valeurs de paramètres opératoires ci-après.

Dans des modes de mise en œuvre particuliers de l'invention, la durée de l'étape de mise en forme du mélange de particules primaires par granulation par broyage est comprise entre 15 minutes et 5 heures, de préférence entre 15 minutes et 2 heures, par exemple entre 30 minutes et 1 heure.

La vitesse de rotation dans le broyeur à billes, dans l'étape de mise en forme du mélange de particules primaires par granulation par broyage, est quant à elle de préférence comprise entre 100 et 550 tours/min, préférentiellement entre 200 et 500 tours/min, et par exemple entre 300 et 500 tours/min.

En outre, préférentiellement, pour cette étape de mise en forme :
- le rapport entre la masse du mélange de particules primaires et le volume de solvant(s) polaire(s) est compris entre 0,5 et 3, notamment compris entre 2 et 3 ;
- et/ou le rapport entre la masse de billes de broyage et la masse du mélange de particules primaires est compris entre 5 et 30, notamment compris entre 15 et 25 ;
- et/ou la quantité de billes de broyage est comprise entre 2 et 10 g/ml du mélange de solvants, par exemple comprise entre 4 et 6 g/ml du mélange de solvants.

Dans des modes de mise en œuvre particulièrement préférés de l'invention, le matériau de cathode auquel s'applique le procédé selon l'invention comprend, ou consiste en, un matériau actif de type DRS riche en lithium. En particulier, le matériau de cathode comprend, ou consiste en, un matériau actif répondant à la formule générale (I) :

LiₓM¹_{y}M²_{z}O₃₋ᵤFᵤ (I)

dans laquelle :
x est supérieur à 1 et inférieur à 3,
y est compris entre 0 et 1,
z est compris entre 0 et 1,
x, y et z étant tels que x+y+z = 3,
u est compris entre 0 et 1, de préférence compris entre 0,3 et 1, et par exemple compris entre 0,5 et 1,
M¹ représente un premier métal de transition, tel que le manganèse Mn, le fer Fe, le vanadium V ou le molybdène Mo,
et M² représente un deuxième métal de transition différent du premier métal de transition, par exemple le niobium Nb ou le titane Ti.

Le procédé selon l'invention s'avère en particulier tout à fait avantageux en ce qu'il permet de préparer, sous forme d'un mélange de particules secondaires sphéroïdales de distribution granulométrique sensiblement monomodale et de diamètre moyen en volume micrométrique contrôlé, un matériau de cathode comprenant un matériau actif de formule générale (I) pour toutes les valeurs de u, y compris les valeurs de u supérieures ou égales à 0,5, et pouvant même aller jusqu'à 1, ceci à partir d'un mélange de particules primaires obtenues par mécanosynthèse puis réduction de taille, notamment pour former des particules de taille nanométrique.

Dans des modes de mise en œuvre particuliers de l'invention, dans la formule générale (I), u est supérieur ou égal à 0,5 (et inférieur ou égal à 1).

Un exemple de tel matériau actif est le matériau de formule Li₂MnO₂F.

Dans des modes de mise en œuvre alternatifs de l'invention, le matériau de cathode comprend, ou consiste en, un matériau actif de type lithium-fer-phosphate (LFP), répondant à la formule générale (II):

LiFeₓMn₁₋ₓPO₄ (II)

dans laquelle x est compris entre 0 et 1.

Le matériau de cathode peut autrement comprendre, ou consister en, un matériau actif répondant à la formule générale (III) :

AₓM¹[M²(CN)₆] (III)

dans laquelle
A représente le lithium Li, le sodium Na ou le potassium K,
M¹ et M², différents l'un de l'autre, représentent chacun le manganèse Mn ou le fer Fe,
et x est compris entre 0 et 2.

Lorsque x est proche de 2, de tels matériaux sont couramment désignés par l'expression « blancs de Prusse ».

Un exemple de tel matériau de la famille des blancs de Prusse à base de potassium est l'hexacyanoferrate de manganèse de potassium, répondant à la formule (IIIa) :

K₂Mn[Fe(CN)₆] (IIIa).

Un tel matériau de cathode s'avère notamment utile pour la fabrication de cathodes de batteries de type potassium-ion.

Comme indiqué ci-avant, le matériau de cathode peut consister en un unique matériau, tel que les matériaux actifs ci-dessus. Il peut autrement être un matériau composite, comprenant un tel matériau actif et un agent électriquement conducteur.

Ainsi, dans des modes de mise en œuvre particuliers de l'invention, le matériau de cathode sous forme dudit mélange de particules primaires, obtenu en première étape du procédé selon l'invention, et sur lequel l'étape de mise en forme du procédé est réalisée, comprend un agent électriquement conducteur, de préférence à base de carbone.

Les agents électriquement conducteurs dont au moins une des dimensions est inférieure à 100 nm sont particulièrement préférés dans le cadre de l'invention. A titre de tel agent électriquement conducteur, on peut citer le graphite, la poudre de carbone, le carbone pyrolytique, le noir de carbone, les fibres de carbone, les microfibres de carbone, les nanotubes de carbone, notamment à paroi unique ou à parois multiples, les fullerènes, les feuilles de graphène et les agrégats de feuilles de graphène.

Le noir de carbone est particulièrement préféré dans le cadre de l'invention.

La teneur en agent électriquement conducteur dans le matériau de cathode peut par exemple être comprise entre 10 et 20 % en poids, par rapport au poids du matériau de cathode.

Dans le cadre de l'invention, on privilégiera une taille des particules primaires constituées du matériau actif, et le cas échéant de l'agent électriquement conducteur, caractérisée par un diamètre moyen en volume inférieur ou égal à 300 nm, de préférence inférieur ou égal à 200 nm, et on choisira de préférence les paramètres opératoires de l'étape de mise en forme de sorte à former un mélange de particules secondaires constituées du matériau actif, et le cas échéant de l'agent électriquement conducteur, de diamètre moyen en volume compris entre 1 et 20 µm, de préférence compris entre 5 et 20 µm et préférentiellement compris entre 5 et 15 µm.

Il entre dans les compétences de l'homme du métier de savoir obtenir le mélange de particules primaires de la taille souhaitée, et de déterminer les paramètres opératoires à appliquer dans l'étape de mise en forme pour obtenir la taille de particules secondaires souhaitée. Cette détermination pourra notamment être réalisée de manière empirique.

Lorsque le matériau de cathode sous forme d'un mélange de particules primaires de distribution de taille monomodale et de diamètre moyen en volume inférieur ou égal à 2 µm est obtenu par un procédé de mécanosynthèse suivi d'une étape de réduction de taille des particules par broyage, préférentiellement, l'agent électriquement conducteur est intégré aux particules lors de cette étape de réduction de taille par broyage.

Ainsi, dans des modes de mise en œuvre particuliers de l'invention, le procédé comprend une étape de fabrication du matériau actif par la méthode de mécanosynthèse, puis le mélange des particules ainsi obtenues avec l'agent électriquement conducteur, tel que du noir de carbone, et la mise en œuvre de l'étape de broyage sur ce mélange, de sorte à obtenir un mélange de particules primaires formées chacune en un matériau de cathode composite, comprenant le matériau actif et l'agent électriquement conducteur, de distribution de taille monomodale et de diamètre moyen en volume inférieur ou égal à 2 µm.

Un matériau de cathode pour batterie susceptible d'être obtenu à l'issue d'un procédé de préparation selon l'invention peut comprendre, ou même consister en, un matériau actif répondant à la formule générale (I) ci-dessus dans laquelle u est supérieur ou égal à 0,5, à la formule générale (II) ci-dessus ou à la formule générale (III) ci-dessus. Ce matériau de cathode se présente sous forme d'un mélange de particules, dites particules secondaires, sphéroïdales, de distribution de taille sensiblement monomodale et de diamètre moyen en volume compris entre 1 et 50 µm, de préférence entre 1 et 20 µm, chacune de ces particules secondaires étant un agglomérat d'une pluralité de particules primaires provenant d'un mélange de particules primaires dudit matériau de cathode de distribution de taille sensiblement monomodale et de diamètre moyen en volume inférieur ou égal à 2 µm, de préférence inférieur ou égal à 1 µm et préférentiellement inférieur ou égal à 600 nm.

Ce matériau de cathode pour batterie présente l'ensemble des avantages exposés ci-avant en référence au matériau de cathode sous sa forme telle qu'obtenue à l'issue du procédé selon l'invention.

Ce matériau de cathode peut notamment comprendre le, ou être constitué du, matériau de formule Li₂MnO₂F.

Il peut comprendre, outre le matériau actif répondant à la formule générale (I) dans laquelle u est supérieur ou égal à 0,5, à la formule générale (II) ou à la formule générale (III), un agent électriquement conducteur, notamment à base de carbone. Cet agent électriquement conducteur peut répondre à l'une ou plusieurs des caractéristiques exposées ci-avant en référence au procédé de préparation selon l'invention. Il est de préférence présent dans chacune des particules primaires dont l'agglomération forme les particules secondaires, tout comme le matériau actif.

Préférentiellement, le mélange de particules secondaires de ce matériau de cathode présente un diamètre moyen en volume compris entre 1 et 20 µm, de préférence compris entre 5 et 20 µm et préférentiellement compris entre 5 et 15 µm.

Chacune des particules secondaires est en outre de préférence un agglomérat d'une pluralité de particules primaires provenant d'un mélange de particules primaires dudit matériau de cathode de distribution de taille monomodale et de diamètre moyen en volume inférieur ou égal à 300 nm, de préférence inférieur ou égal à 200 nm.

Le matériau de cathode présente en outre une densité tapée supérieure, et une surface spécifique inférieure, à celle du mélange de particules primaires dont l'agglomération a formé les particules secondaires.

Un objet supplémentaire de l'invention est un procédé de fabrication d'une cathode pour batterie, qui comprend :
- la mise en œuvre d'un procédé de préparation d'un matériau de cathode pour batterie selon l'invention pour obtenir un matériau de cathode pour batterie, ce matériau de cathode comprenant de préférence un matériau actif répondant à la formule générale (I) dans laquelle u est supérieur ou égal à 0,5, ou à la formule générale (II) ou à la formule générale (III), ce matériau de cathode se présentant sous forme d'un mélange de particules dites secondaires sphéroïdales de distribution de taille monomodale et de diamètre moyen en volume compris entre 1 et 50 µm, chacune de ces particules secondaires étant un agglomérat d'une pluralité de particules primaires provenant d'un mélange de particules primaires du matériau de cathode de distribution de taille monomodale et de diamètre moyen en volume inférieur ou égal à 2 µm,
- le mélange du matériau de cathode ainsi obtenu avec un liant polymère, et le cas échéant un agent électriquement conducteur, dans un solvant, de sorte à former une encre cathodique,
- le dépôt de cette encre cathodique sur un collecteur de courant métallique,
- et le séchage de l'encre cathodique pour former un film cathodique sur le collecteur de courant.

Un tel procédé, classique en lui-même dans sa définition générale, est facile à mettre en œuvre du fait des propriétés morphologiques particulièrement avantageuses du matériau de cathode selon l'invention, qui permettent notamment d'obtenir sur la surface du collecteur de courant un film cathodique lisse et homogène.

Le procédé de fabrication d'une cathode pour batterie selon l'invention peut être réalisé au moyen de tout dispositif classique en lui-même, et selon des paramètres opératoires également classiques en eux-mêmes.

A titre d'exemples :
- le liant polymère peut être le polyfluorure de vinylidène (PVDF),
- le solvant peut être la 1-méthyl-2-pyrrolidone (NMP),
- le collecteur de courant peut être formé en aluminium,
- et/ou le dépôt de l'encre cathodique sur le collecteur de courant peut être réalisé par la technique d'enduction.

Comme indiqué ci-avant, un agent électriquement conducteur, notamment à base de carbone, peut être intégré dans l'encre cathodique. Une telle caractéristique s'avère notamment particulièrement avantageuse lorsque le matériau de cathode ne comprend pas un tel agent électriquement conducteur. L'agent électriquement conducteur incorporé dans l'encre cathodique peut répondre à l'une ou plusieurs des caractéristiques décrites ci-avant en référence à l'agent électriquement conducteur pouvant entrer dans la composition du matériau de cathode auquel s'applique l'invention.

L'encre cathodique peut par exemple comprendre, en poids par rapport au poids total de l'encre cathodique :
- 70 à 80 %, par exemple environ 75 %, du matériau actif,
- 10 à 20 %, par exemple environ 15 %, d'agent électriquement conducteur,
- et 5 à 15 %, par exemple environ 10 %, du liant polymère.

Une cathode pour batterie, notamment pour batterie de type lithium-ion ou potassium-ion, susceptible d'être obtenue par un procédé de fabrication d'une cathode pour batterie selon l'invention, comporte un collecteur de courant métallique portant en surface un film cathodique formé à base d'un matériau de cathode obtenu selon l'invention.

A titre d'exemples :
- le collecteur de courant peut être formé en aluminium,
- le film cathodique peut contenir, à titre de liant polymère, du polyfluorure de vinylidène (PVDF),
- le film cathodique peut contenir une teneur comprise entre 5 et 15 %, par exemple d'environ 10 %, de liant polymère,
- le film cathodique peut contenir 70 à 80 %, par exemple environ 75 %, d'un matériau actif de formule générale (I) dans laquelle u est supérieur ou égal à 0,5, de formule générale (II) ou de formule générale (III), sous forme de particules secondaires sphéroïdales de distribution de taille monomodale et de diamètre moyen en volume tel que défini ci-avant,
- et/ou le film cathodique peut contenir 10 à 20 %, par exemple environ 15 %, d'agent électriquement conducteur.

L'agent électriquement conducteur peut notamment être contenu dans les particules primaires dont l'agglomération forme les particules secondaires du matériau de cathode selon l'invention, et/ou être présent hors de ces particules secondaires, en mélange avec elles.

La cathode pour batterie obtenue selon l'invention présente des performances électrochimiques avantageuses, en particulier une bonne tenue en cyclage et une densité d'énergie élevée. Elle peut être mise en œuvre dans une batterie, notamment de type lithium-ion (pour les matériaux de formule générale (I) ou de formule générale (II)), ou de type lithium-ion, sodium-ion ou potassium-ion (pour le matériau de formule générale (III)), dont les autres éléments constitutifs sont par ailleurs classiques en eux-mêmes.

Une batterie, notamment de type lithium-ion ou de type sodium-ion ou potassium-ion, comprend, dans une cellule, une cathode pour batterie obtenue selon l'invention, une anode, un séparateur disposé entre cette cathode et cette anode, et un électrolyte liquide dans lequel sont immergées cette cathode et cette anode.

L'électrolyte liquide peut notamment être une solution à base d'un sel de lithium, par exemple d'hexafluorophosphate de lithium LiPF₆.

Un procédé d'assemblage d'une telle batterie comprend l'insertion des différents éléments dans la cellule de telle sorte que le séparateur soit disposé entre la cathode et l'anode, et l'introduction de l'électrolyte liquide dans la cellule.

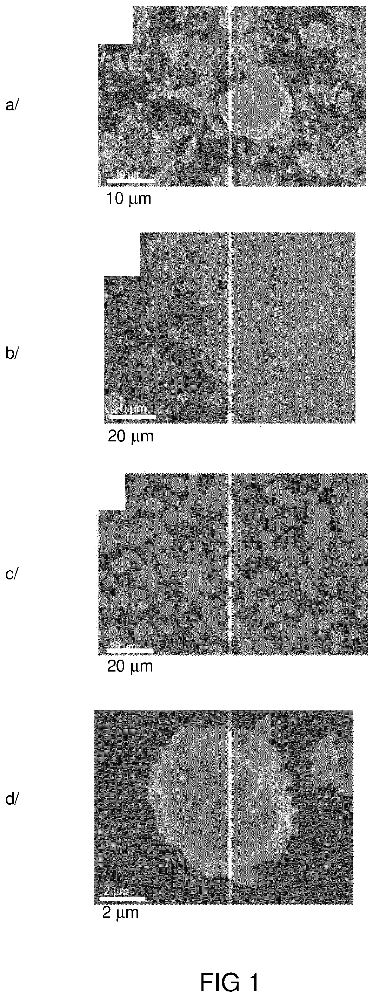

Les caractéristiques et avantages de l'invention apparaîtront plus clairement à la lumière des exemples de mise en œuvre ci-après, fournis à simple titre illustratif et nullement limitatifs de l'invention, avec l'appui des figures 1 à 7, dans lesquelles :
La figure 1 montre des images de microscopie électronique à balayage de particules de Li₂MnO₂F, en a/, telles qu'obtenues par mécanosynthèse, en b/, après réduction de taille de ces particules par broyage, et en c/ et d/, après mise en forme conformément à l'invention à deux différents grossissements.

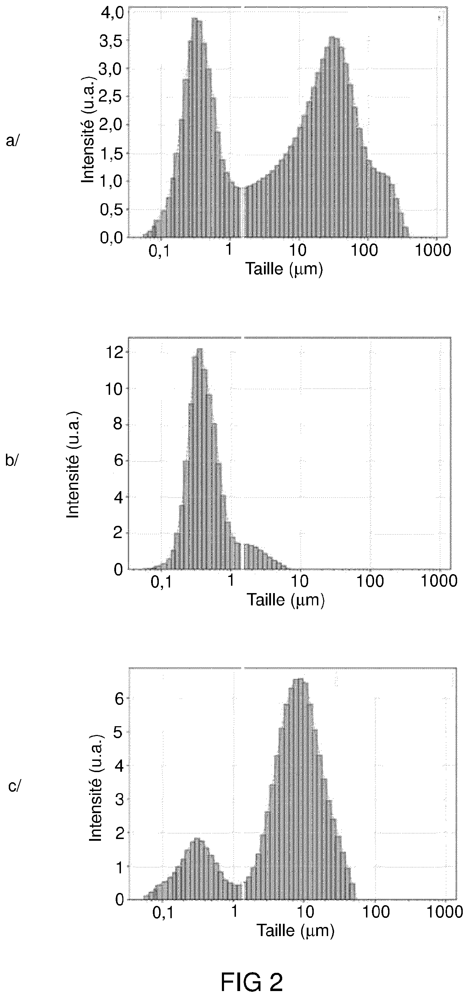

La figure 2 montre des graphes représentant la distribution de taille de particules de Li₂MnO₂F, déterminée par granulométrie laser en voie liquide, en a/, pour des particules telles qu'obtenues par mécanosynthèse, en b/, après réduction de taille de ces particules par broyage, et en c/, après mise en forme conformément à l'invention.

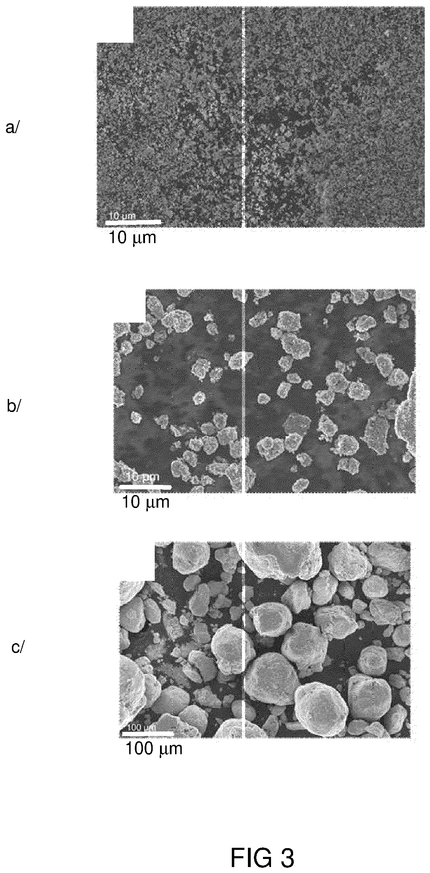

La figure 3 montre des images de microscopie électronique à balayage de particules d'un composite de Li₂MnO₂F/carbone, en a/, telles qu'obtenues après réduction de taille de particules de Li₂MnO₂F par broyage en présence de noir de carbone, et en b/ et c/ après mise en forme conformément à l'invention, selon différentes combinaisons de paramètres opératoires.

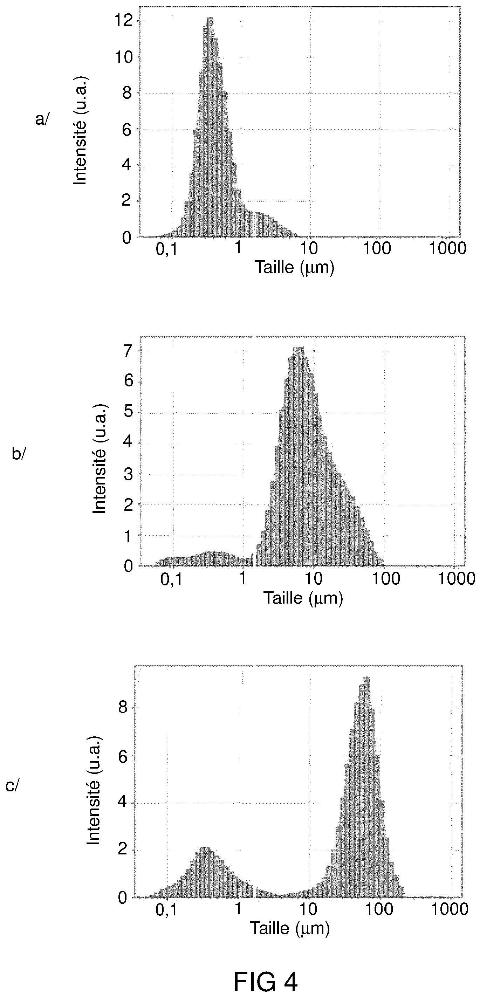

La figure 4 montre des graphes représentant la distribution de taille de particules d'un composite de Li₂MnO₂F/carbone, déterminée par granulométrie laser en voie liquide, en a/, telles qu'obtenues après réduction de taille de particules de Li₂MnO₂F par broyage en présence de noir de carbone, et en b/ et c/ après mise en forme conformément à l'invention, selon différentes combinaisons de paramètres opératoires.

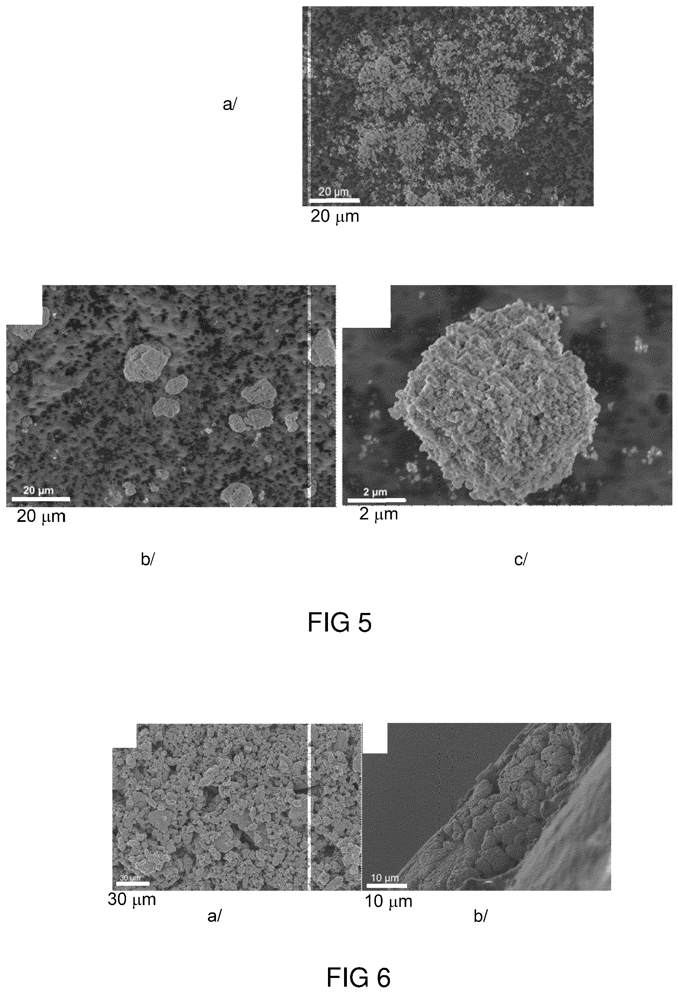

La figure 5 montre des images de microscopie électronique à balayage de particules de K₂Mn[Fe(CN)₆], en a/, dans leur état initial, en b/ et c/, après mise en forme conformément à l'invention, à deux différents grossissements.
La figure 6 montre des images de microscopie électronique à balayage d'une électrode formée à base de particules d'un composite de Li₂MnO₂F/carbone mises en forme conformément à l'invention (LMOF/C-g1), en a/, en vue de face, et en b/, en vue en coupe.

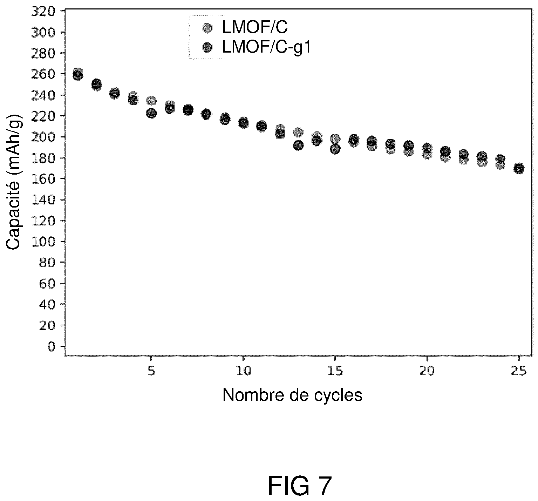

La figure 7 montre un graphe représentant la capacité de rétention du lithium en fonction du nombre de cycles de charge/décharge, obtenu par passage au banc de cyclage d'une cellule de type pile-bouton comprenant : en tant que cathode, respectivement, une électrode formée à base de particules d'un composite de Li₂MnO₂F/carbone telles qu'obtenues par mécanosynthèse (« LMOF/C »), ou une électrode formée à base de telles particules d'un composite de Li₂MnO₂F/carbone après mise en forme conformément à l'invention (« LMOF/C-g1 ») ; en tant qu'anode, du lithium métallique ; et en tant qu'électrolyte, du LP100.

### A/ Méthodes d'analyse

### A.1/ Microscopie électronique à balayage

Les images de microscopie électroniques à balayage sont acquises sur un appareil ZEISS Sigma 300, directement en salle anhydre. Les échantillons sont préparés en déposant une faible quantité (quelques mg) de poudre sur du scotch carbone. La tension d'accélération de l'appareil pour toutes les images est de 3 kV. Le grossissement varie de x500 à x20 000.

### A.2/ Détermination de la distribution de taille des particules

La distribution de taille de particules est mesurée à l'aide d'un granulomètre par diffraction laser en voie liquide de marque Malvern Mastersizer. Les particules sont préalablement dispersées dans de l'eau à environ 0,1 mg/mL et la dispersion obtenue soumise à ultrasons pendant 1 min à 25°C.

### A.3/ Mesure de la densité tapée

Les mesures sont réalisées au moyen d'un appareil Matec densi-tap DEN 100. Une masse connue de poudre (environ 2 g) est introduite dans une éprouvette de 10 mL. La poudre est densifiée en tapant mécaniquement l'éprouvette 10 000 fois. Le volume est ensuite lu sur l'éprouvette afin de calculer la densité tapée. L'appareil utilisé est le suivant : Matec Densi-tap DEN 100.

### A.4/ Mesure de la surface spécifique

La surface spécifique est déterminée par la mesure dite BET (Brunauer-Emmett-Teller), par adsorption d'azote, grâce à un appareil TriStar Il 3020 de chez Micromeritics.

Toutes les expériences ci-dessous sont effectuées sous atmosphère inerte en boite à gants.

### B/ Expérience 1 - Li₂MnO₂F

### B.1/ Etape 1 - Préparation par mécanosynthèse

Le matériau de référence, la pristine, de formule chimique Li₂MnO₂F, est d'abord synthétisé par mécanosynthèse à partir de trois précurseurs Li₂O, LiF et Mn₂O₃, mis en œuvre dans des proportions stœchiométriques. Les précurseurs sont broyés à sec pendant plusieurs dizaines d'heures dans un broyeur planétaire à l'aide de billes en zircone.

Le matériau ainsi obtenu est dénommé ci-après LMOF-p.

### B.2/ Etape 2 - Réduction de taille par broyage

La granulométrie du matériau LMOF-p est réduite par un premier broyage.

A cet effet, sont ajoutés dans un bol en zircone de 50 mL :
- 2 g de LMOF-p,
- 30 g de billes de zircone de 5 mm de diamètre,
- et 5 mL de cyclohexane.

Le mélange ci-dessus est broyé pendant plusieurs heures à 450 tr/min.

On obtient à l'issue de cette étape un matériau broyé, qui est ci-après dénommé LMOF-b.

### B.3/ Etape 3 - Mise en forme conformément à l'invention

Sont ajoutés dans un bol de broyage en zircone de 50 ml :
- 2 g de LMOF-b,
- 5 mL de cyclohexane,
- 0,7 mL d'acétonitrile,
- 10 billes de 10 mm (environ 30 g) en zircone.

Cette préparation est faite en boite à gants et le bol de broyage est scellé sous argon.

Ce mélange est broyé à l'aide d'un broyeur centrifuge Retsch^{®} PM 100 CM durant 30 min à 300 tr/min. Après séchage et séparation des billes, on obtient un matériau mis en forme, ci-après dénommé LMOF-g.

### B.4/ Analyses

Les matériaux particulaires obtenus à l'issue de chacune des étapes 1, 2 et 3 ci-dessus sont analysés par observation par microscopie électronique à balayage (MEB) et par granulométrie laser, et leur densité tapée est déterminée.

Les images de MEB sont montrées sur la figure 1, en a/ pour le matériau LMOF-p obtenu à l'issue de l'étape 1, en b/ pour le matériau LMOF-b obtenu à l'issue de l'étape 2, et en c/ et d/ pour le matériau LMOF-g obtenu à l'issue de l'étape 3. Les profils de distribution de taille sont montrés sur la figure 2, en a/ pour le matériau LMOF-p obtenu à l'issue de l'étape 1, en b/ pour le matériau LMOF-b obtenu à l'issue de l'étape 2, et en c/ pour le matériau LMOF-g obtenu à l'issue de l'étape 3.

On observe que le matériau LMOF-p obtenu à l'issue de l'étape 1 comprend des particules pulvérisées nanométriques, ainsi que des agrégats microniques. Ces agrégats de taille supérieure à 30 µm ne sont pas compatibles avec les processus d'enduction industriels.

Le matériau LMOF-b obtenu à l'issue de l'étape 2 comprend quant à lui des particules de taille nanométrique relativement homogène, avec une distribution granulométrique concentrée entre 0,1 et 10 µm.

On observe sur la figure 1 que le matériau mis en forme LMOF-g se présente sous forme de particules secondaires sphériques, composées chacune, comme visible en d/ sur la figure, de grains primaires nanométriques. Certaines particules ont un aspect plaquettaire. Comme montré par la figure 2, la distribution de taille est quasi-monomodale (la présence du pic à des tailles inférieures à 1 µm sur le graphe étant attribuable à une dégradation d'une petite partie des particules lors du traitement par ultrasons mis en œuvre pour l'analyse). La D[4,3] du matériau est de 10,63 µm.

Le tableau 1 ci-dessous indique, pour chacun des matériaux LMOF-p, LMOF-b et LMOF-g, les caractéristiques morphologiques observées, la distribution de taille de particules (exprimée par le paramètre D[4,3]) et la densité tapée mesurée.

**Tableau 1 - Caractéristiques des matériaux pristine**

| Matériau | Morphologie | Granulométrie D[4,3] (µm) | Densité tapée (g/cm³) |
|---|---|---|---|
| LMOF-p | Agrégats incontrôlés de nanoparticules | 27,53 | 1,4 |
| LMOF-b | Nanoparticules pulvérisées | 0,58 | 0,7 |
| LMOF-g | Agrégats sphériques (microniques) de nanoparticules | 10,63 | 0,85 |

Ces résultats démontrent que le matériau LMOF-g obtenu conformément à l'invention présente une morphologie et une densité tapée particulièrement adaptées à une mise en œuvre pour la fabrication de cathode pour batterie.

### C/ Expérience 2 - Li₂MnO₂F/C

### C.1/ Etape 2 - Préparation de Li₂MnO₂F/C avec réduction de taille par broyage

Un matériau composite Li₂MnO₂F/carbone est synthétisé par broyage à partir du matériau LMOF-p préparé à l'étape 1 de l'Expérience 1, selon le protocole détaillé suivant. Dans un bol de broyage en zircone de 50 mL, sont ajoutés :
- 833 mg du matériau LMOF-p tel que préparé dans l'Expérience 1,
- 167 mg de noir de carbone C65,
- 5 ml de cyclohexane,
- et 30 g de billes en zircone de 5 mm de diamètre.

Le bol de broyage est scellé sous atmosphère inerte, et le broyage est réalisé au moyen d'un broyeur centrifuge Retsch^{®} PM 100 CM pendant 5 h effectives à 450 tr/min.

Le matériau obtenu est dénommé ci-après LMOF/C.

### C.2/ Etape 3a - Mise en forme par un procédé selon l'invention (variante 1)

Sont ajoutés dans un bol de broyage en zircone de 50 ml :
- 2 g de LMOF/C,
- 5 mL de cyclohexane,
- 0,7 mL d'acétonitrile,
- 10 billes de 10 mm (environ 30 g) en zircone.

Cette préparation est faite en boite à gants et le bol de broyage est scellé sous argon.

Ce mélange est broyé à l'aide d'un broyeur centrifuge Retsch^{®} PM 100 CM durant 1 h à 300 tr/min. Après séchage et séparation des billes, on obtient un matériau mis en forme, ci-après dénommé LMOF/C-g1.

### C.3/ Etape 3b - Mise en forme par un procédé selon l'invention (variante 2)

Sont ajoutés dans un bol de broyage en zircone de 50 ml :
- 2 g de LMOF/C,
- 5 mL de cyclohexane,
- 0,7 mL d'acétonitrile,
- 10 billes de 10 mm (environ 30 g) en zircone.

Cette préparation est faite en boite à gants et le bol de broyage est scellé sous argon.

Ce mélange est broyé à l'aide d'un broyeur centrifuge Retsch^{®} PM 100 CM durant 30 min à 500 tr/min. Après séchage et séparation des billes, on obtient un matériau mis en forme, ci-après dénommé LMOF/C-g2.

### C.4/ Analyses

Les matériaux particulaires obtenus à l'issue de chacune des étapes 2, 3a et 3b ci-dessus sont analysés par observation par microscopie électronique à balayage (MEB) et par granulométrie laser, et leur densité tapée ainsi que la surface spécifique des particules sont déterminées.

Les images de MEB sont montrées sur la figure 3, en a/ pour le matériau LMOF/C obtenu à l'issue de l'étape 2, en b/ pour le matériau LMOF/C-g1 obtenu à l'issue de l'étape 3a, et en c/ pour le matériau LMOF/C-g2 obtenu à l'issue de l'étape 3b. Les profils de distribution de taille sont montrés sur la figure 4, en a/ pour le matériau LMOF/C obtenu à l'issue de l'étape 2, en b/ pour le matériau LMOF/C-g1 obtenu à l'issue de l'étape 3a, et en c/ pour le matériau LMOF/C-g2 obtenu à l'issue de l'étape 3b.

On observe que le matériau LMOF/C obtenu à l'issue de l'étape 2 comprend des particules pulvérisées de taille nanométrique, avec une distribution granulométrique entre 0,1 et 10 µm.

On observe sur les figures 3 et 4 que :
- le matériau mis en forme LMOF/C-g1 se présente sous forme de particules sphéroïdales d'environ 15 µm de diamètre, avec un D[4,3] valant 11,27 µm - la distribution de taille est quasi-monomodale ;
- le matériau mis en forme LMOF/C-g2 se présente sous forme de particules sphéroïdales d'environ 50 µm de diamètre, avec un D[4,3] valant 43 µm - la distribution de taille est quasi-monomodale.

Le tableau 2 ci-dessous indique, pour chacun des matériaux LMOF/C, LMOF/C-g1 et LMOF/C-g-2, les caractéristiques morphologiques observées, la distribution de taille de particules (exprimée par le paramètre D[4,3]) et la densité tapée mesurée, ainsi que la surface spécifique des particules.

**Tableau 2 - Caractéristiques des matériaux composites pristine/carbone**

| Matériau | Morphologie | Granulométrie D[4,3] (µm) | Densité tapée (g/cm³) | Surface spécifique (m²/g) |
|---|---|---|---|---|
| LMOF/C | Nanoparticules pulvérisées | 2 | 0,6 | 43 |
| LMOF/C-g1 | Agrégats sphériques (microniques) de nanoparticules | 11 | 0,8 | 38 |
| LMOF/C-g2 | Agrégats sphériques (microniques) de nanoparticules | 43 | 1,15 | 30 |

Une diminution de la surface spécifique et une augmentation de la densité tapée sont observées à l'issue de l'étape de mise en forme conforme à l'invention, tant dans sa variante 1 (étape 3a) que sa variante 2 (étape 3b).

### D/ Expérience 3 - K₂Mn[Fe(CN)₆]

Cette expérience met en œuvre en tant que matériau de départ le blanc de Prusse au potassium, de formule chimique K₂Mn[Fe(CN)₆].

### D.1/ Mise en forme conformément à l'invention

Sont ajoutés dans un bol de broyage en zircone de 50 ml :
- 1,2 g de K₂Mn[Fe(CN)₆]
- 6 mL de cyclohexane,
- 0,6 mL d'acétonitrile,
- 3 billes de 10 mm (environ 30 g) en zircone.

Cette préparation est faite en boite à gants et le bol de broyage est scellé sous argon.

Ce mélange est broyé à l'aide d'un broyeur planétaire Retsch^{®} PM 100 CM durant 1 h à 300 tr/min. Après séchage et séparation des billes, on obtient un matériau mis en forme.

### D.2/ Analyse

Le matériau particulaire initial et celui obtenu à l'issue de l'étape de mise en forme sont analysés par observation par microscopie électronique à balayage (MEB).

Les images de MEB sont montrées sur la figure 5, en a/ pour le matériau initial, et en b/ et c/ pour le matériau mis en forme conformément à l'invention, à deux différents grossissements (respectivement, x1000 et x10000).

On observe que dans son état initial, le blanc de Prusse au potassium K₂Mn[Fe(CN)₆] a une morphologie caractérisée par la présence de nanoparticules, et qu'il y a donc un intérêt à le mettre en forme conformément à l'invention, pour en augmenter la densité et réduire la réactivité. Son D[4,3] est de 1 µm et sa distribution granulométrique est monomodale.

Le matériau mis en forme, montré en b/ et c/ sur la figure 5, comprend quant à lui des particules secondaires sensiblement sphériques, composées chacune, comme visible en c/, de grains primaires nanométriques.

### E/ Expérience 4 - Electrode en matériau composite LMOF/C

Sont utilisés pour cette expérience : le matériau composite LMOF/C tel qu'obtenu à l'issue de l'étape 2 de l'Expérience 2, et le matériau composite Li₂MnO₂F/carbone mis en forme conformément à l'invention, LMOF/C-g1, tel qu'obtenu à l'issue de l'étape 3a de l'Expérience 2.

Chacun de ces matériaux est mis en forme d'électrode selon le protocole suivant. Une encre cathodique est formulée en dispersant le matériau (LMOF/C ou LMOF/C-g1) et du PVDF (polyfluorure de vinylidène) dans un solvant, la NMP (1-méthyl-2-pyrrolidone). Cette encre est enduite sur un collecteur de courant en aluminium directement en boîte à gants.

La composition massique finale des électrodes est la suivante : 75% de matériau actif (Li₂MnO₂F), 15 % de carbone C65 et 10 % de liant PVDF. Des pastilles de 14 mm de diamètre sont découpées, et calandrées à 10 t à l'aide d'une presse. Le grammage des électrodes obtenues est de l'ordre de 1 mg/cm².

La figure 6 montre des images acquises par MEB d'une telle électrode formée à base de LMOF/C-g1, en a/ en vue de face, et en b/ en vue en coupe. Ces images confirment que la technique de préparation de l'électrode n'a pas endommagé les particules secondaires formées par le procédé selon l'invention.

Les performances électrochimiques de ces électrodes sont évaluées comme suit.

Des piles boutons sont assemblées en boite à gants, de manière classique en elle-même, en utilisant pour chacune :
- comme électrode positive (cathode), soit une telle électrode à base de LMOF/C-g1 (cathode selon l'invention Ci), soit une telle électrode à base de LMOF/C (cathode comparative Cc),
- comme électrode négative et de référence, le lithium métallique,
- comme séparateur, une membrane Celgard^{®} 2400,
- comme électrolyte, le LP100 (1M LiPF₆ dans EC/PC/DMC 1/1/3 vol.%, où EC désigne le carbonate d'éthylène, PC désigne le carbonate de propylène et DMC désigne le carbonate de diméthyle).

Les piles boutons sont assemblées en boite à gants, sous argon, par lot de trois pour assurer la reproductibilité.

Les performances des batteries ainsi formées sont testées sur un banc de cyclages de la marque Arbin. Le courant appliqué correspond à un régime de (dé)charge (pour l'anglais « C-rate ») de C/10, en utilisant 300 mA.h/g comme capacité théorique. Les bornes de cyclage en potentiel sont 1,5 V et 4,8 V.

Les résultats obtenus, en termes de capacité de rétention du lithium en fonction du nombre de cycles de charge/décharge appliqués, sont montrés sur la figure 7. On observe que les performances du matériau mis en forme selon l'invention (LMOF/C-g1) sont équivalentes à celle du matériau composite nanométrique (LMOF/C), le matériau mis en forme selon l'invention présentant par ailleurs les avantages d'une plus grande densité tapée et donc d'une densité d'énergie plus élevée.

## Revendications

1. Procédé de préparation d'un matériau de cathode pour batterie, comprenant l'obtention dudit matériau de cathode sous forme d'un mélange de particules dites primaires, de distribution de taille monomodale et de diamètre moyen en volume, déterminé par diffraction laser, inférieur ou égal à 2 µm, ledit procédé étant **caractérisé en ce qu'**il comprend ensuite une étape de mise en forme dudit mélange de particules primaires par granulation par broyage dans un broyeur à billes, dans un mélange de solvants organiques comprenant un solvant organique polaire et un solvant organique apolaire, ledit solvant organique polaire et ledit solvant organique apolaire étant non miscibles.

2. Procédé selon la revendication 1, selon lequel ledit solvant apolaire est choisi parmi les hydrocarbures, de préférence parmi les hydrocarbures acycliques et les hydrocarbures alicycliques.

3. Procédé selon la revendication 1 ou 2, selon lequel ledit solvant polaire est de type aprotique, et est de préférence l'acétonitrile.

4. Procédé selon l'une quelconque des revendications 1 à 3, selon lequel le rapport volumique entre ledit solvant apolaire et ledit solvant polaire est compris entre 6 et 11.

5. Procédé selon l'une quelconque des revendications 1 à 4, selon lequel la durée de ladite étape de mise en forme dudit mélange de particules primaires par granulation par broyage est comprise entre 15 minutes et 5 heures.

6. Procédé selon l'une quelconque des revendications 1 à 5, selon lequel la vitesse de rotation dans ledit broyeur à billes, dans ladite étape de mise en forme dudit mélange de particules primaires par granulation par broyage, est comprise entre 100 et 550 tours/min.

7. Procédé selon l'une quelconque des revendications 1 à 6, selon lequel ledit matériau de cathode comprend un matériau actif répondant à la formule générale (I) :
LiₓM¹_{y}M²_{z}O₃₋ᵤFᵤ (I)
dans laquelle :
x est supérieur à 1 et inférieur à 3,
y est compris entre 0 et 1,
z est compris entre 0 et 1,
x, y et z étant tels que x+y+z = 3,
u est compris entre 0 et 1,
M¹ représente un premier métal de transition,
et M² représente un deuxième métal de transition différent dudit premier métal de transition.

8. Procédé selon la revendication 7, selon lequel, dans la formule générale (I), u est supérieur ou égal à 0,5.

9. Procédé selon l'une quelconque des revendications 1 à 6, selon lequel ledit matériau de cathode comprend un matériau actif répondant à la formule générale (II) :
LiFeₓMn₁₋ₓPO₄ (II)
dans laquelle x est compris entre 0 et 1.

10. Procédé selon l'une quelconque des revendications 1 à 6, selon lequel ledit matériau de cathode comprend un matériau actif répondant à la formule générale (III) :
AₓM¹[M²(CN)₆] (III)
dans laquelle
A représente le lithium, le sodium ou le potassium,
M¹ et M², différents l'un de l'autre, représentent chacun le manganèse ou le fer, et x est compris entre 0 et 2.

11. Procédé selon l'une quelconque des revendications 1 à 10, selon lequel ledit matériau de cathode comprend un agent électriquement conducteur.

12. Procédé de fabrication d'une cathode pour batterie, comprenant :
- la mise en œuvre d'un procédé selon l'une quelconque des revendications 7 à 11 pour obtenir un matériau de cathode pour batterie comprenant un matériau actif répondant à la formule générale (I) dans laquelle u est supérieur ou égal à 0,5, à la formule générale (II) ou à la formule générale (III), ledit matériau de cathode se présentant sous forme d'un mélange de particules dites secondaires sphéroïdales de distribution de taille monomodale et de diamètre moyen en volume compris entre 1 et 50 µm, chacune desdites particules secondaires étant un agglomérat d'une pluralité de particules primaires provenant d'un mélange de particules primaires dudit matériau de cathode de distribution de taille monomodale et de diamètre moyen en volume inférieur ou égal à 2 µm,
- le mélange dudit matériau de cathode avec un liant polymère, et le cas échéant un agent électriquement conducteur, dans un solvant, de sorte à former une encre cathodique,
- le dépôt de ladite encre cathodique sur un collecteur de courant métallique,
- et le séchage de ladite encre cathodique pour former un film cathodique sur ledit collecteur de courant.

## Patentansprüche

1. Verfahren zur Vorbereitung eines Kathodenmaterials für eine Batterie, umfassend das Erhalten des Kathodenmaterials in Form einer Mischung aus sogenannten Primärpartikeln mit einer monomodalen Größenverteilung und einem mittleren Volumendurchmesser, bestimmt durch Laserbeugung, von kleiner oder gleich 2 µm, wobei das Verfahren **dadurch gekennzeichnet ist, dass** es anschließend einen Schritt des Formens der Mischung von Primärpartikeln durch Granulierung durch Mahlen in einer Kugelmühle in einer Mischung aus organischen Lösungsmitteln umfasst, die ein polares organisches Lösungsmittel und ein nicht polares organisches Lösungsmittel umfasst, wobei das polare organische Lösungsmittel und das nicht polare organische Lösungsmittel nicht mischbar sind.

2. Verfahren nach Anspruch 1, wobei das nicht polare Lösungsmittel unter Kohlenwasserstoffen, vorzugsweise unter acyclischen Kohlenwasserstoffen und alicyclischen Kohlenwasserstoffen ausgewählt ist.

3. Verfahren nach Anspruch 1 oder 2, wobei das polare Lösungsmittel vom aprotischen Typ ist und vorzugsweise Acetonitril ist.

4. Verfahren nach einem der Ansprüche 1 bis 3, wobei das Volumenverhältnis zwischen dem nicht polaren Lösungsmittel und dem polaren Lösungsmittel zwischen 6 und 11 liegt.

5. Verfahren nach einem der Ansprüche 1 bis 4, wobei die Dauer des Schritts des Formens der Mischung aus Primärpartikeln durch Granulierung durch Mahlen zwischen 15 Minuten und 5 Stunden beträgt.

6. Verfahren nach einem der Ansprüche 1 bis 5, wobei die Drehzahl in der Kugelmühle in dem Schritt des Formens der Mischung aus Primärpartikeln durch Granulierung durch Mahlen zwischen 100 und 550 U/min liegt.

7. Verfahren nach einem der Ansprüche 1 bis 6, wobei das Kathodenmaterial ein aktives Material umfasst, das der allgemeinen Formel (I) entspricht:
LiₓM¹_{y}M²_{z}O₃₋ᵤFᵤ (I)
wobei:
x größer als 1 und kleiner als 3 ist,
y zwischen 0 und 1 liegt,
z zwischen 0 und 1 liegt,
wobei x, y und z wie x+y+z = 3 sind,
u zwischen 0 und 1 liegt,
M¹ für ein erstes Übergangsmetall steht,
und M² für ein zweites Übergangsmetall steht, das sich von dem ersten Übergangsmetall unterscheidet.

8. Verfahren nach Anspruch 7, wobei in der allgemeinen Formel (I) u größer oder gleich 0,5 ist.

9. Verfahren nach einem der Ansprüche 1 bis 6, wobei das Kathodenmaterial ein aktives Material umfasst, das der allgemeinen Formel (II) entspricht:
LiFeₓMn₁₋ₓPO₄ (II)
wobei x zwischen 0 und 1 liegt.

10. Verfahren nach einem der Ansprüche 1 bis 6, wobei das Kathodenmaterial ein aktives Material umfasst, das der allgemeinen Formel (III) entspricht:
AₓM¹[M²(CN)₆] (III)
wobei:
A für Lithium, Natrium oder Kalium steht,
M¹ und M², die sich voneinander unterscheiden, jeweils für Mangan oder Eisen stehen und x zwischen 0 und 2 liegt.

11. Verfahren nach einem der Ansprüche 1 bis 10, wobei das Kathodenmaterial ein elektrisch leitfähiges Mittel umfasst.

12. Verfahren zur Herstellung einer Kathode für eine Batterie, umfassend:
- Durchführen eines Verfahrens nach einem der Ansprüche 7 bis 11, um ein Kathodenmaterial für eine Batterie zu erhalten, das ein aktives Material umfasst, dass der allgemeinen Formel (I), wobei u größer oder gleich 0,5 ist, der allgemeinen Formel (II) oder der allgemeinen Formel (III) entspricht, wobei das Kathodenmaterial in Form einer Mischung aus sogenannten sphäroidalen Sekundärpartikeln mit einer monomodalen Größenverteilung und einem mittleren Volumendurchmesser zwischen 1 und 50 µm vorliegt, wobei jedes der Sekundärpartikel ein Agglomerat aus einer Vielzahl von Primärpartikeln ist, die aus einer Mischung von Primärpartikeln des Kathodenmaterials mit einer monomodalen Größenverteilung und einem mittleren Volumendurchmesser von kleiner oder gleich 2 µm stammen,
- Mischen des Kathodenmaterials mit einem Polymerbindemittel und gegebenenfalls einem elektrisch leitenden Mittel in einem Lösungsmittel, so dass eine kathodische Tinte gebildet wird,
- Aufbringen der kathodischen Tinte auf einen metallischen Stromabnehmer,
- und Trocknen der kathodischen Tinte, um einen kathodischen Film auf dem Stromabnehmer zu bilden.

## Claims

1. Method for preparing a cathode material for a battery, comprising obtaining said cathode material in the form of a mixture of so-called primary particles, of monomodal size distribution and volume mean diameter, determined by laser diffraction, less than or equal to 2 µm, said method being **characterized in that** it then comprises a step of shaping said mixture of primary particles by granulation by grinding in a ball mill, in a mixture of organic solvents comprising a polar organic solvent and an apolar organic solvent, said polar organic solvent and said apolar organic solvent being immiscible.

2. Method according to claim 1, wherein said apolar solvent is selected from hydrocarbons, preferably from acyclic hydrocarbons and alicyclic hydrocarbons.

3. Method according to claim 1 or 2, wherein said polar solvent is of the aprotic type, and is preferably acetonitrile.

4. Method according to any one of claims 1 to 3, wherein the volume ratio between said apolar solvent and said polar solvent is between 6 and 11.

5. Method according to any one of claims 1 to 4, wherein the duration of said step of shaping said mixture of primary particles by granulation by grinding is between 15 minutes and 5 hours.

6. Method according to any one of claims 1 to 5, wherein the rotational speed in said ball mill, in said step of shaping said mixture of primary particles by granulation by grinding, is between 100 and 550 rpm.

7. Method according to any one of claims 1 to 6, wherein said cathode material comprises an active material having the general formula (I):
LiₓM¹_{y}M²zO₃₋ᵤFᵤ (I)
wherein:
x is greater than 1 and less than 3,
y is between 0 and 1,
z is between 0 and 1,
x, y and z being such that x+y+z = 3,
u is between 0 and 1,
M¹ represents a first transition metal,
and M² represents a second transition metal different from said first transition metal.

8. Method according to claim 7, wherein, in the general formula (I), u is greater than or equal to 0.5.

9. Method according to any one of claims 1 to 6, wherein said cathode material comprises an active material having the general formula (II):
LiFeₓMn₁₋ₓPO₄ (II)
wherein x is between 0 and 1.

10. Method according to any one of claims 1 to 6, wherein said cathode material comprises an active material having the general formula (III):
AₓM¹[M²(CN)₆] (III)
wherein
A represents lithium, sodium or potassium,
M¹ and M², different from each other, each represent manganese or iron,
and x is between 0 and 2.

11. Method according to any one of claims 1 to 10, wherein said cathode material comprises an electrically conductive agent.

12. Method for manufacturing a cathode for a battery, comprising:
- implementing a method according to any one of claims 7 to 11 to obtain a cathode material for a battery comprising an active material having the general formula (I) wherein u is greater than or equal to 0.5, the general formula (II) or the general formula (III), said cathode material being in the form of a mixture of so-called spheroidal secondary particles of monomodal size distribution and of volume mean diameter between 1 and 50 µm, each of said secondary particles being an agglomerate of a plurality of primary particles originating from a mixture of primary particles of said cathode material with a monomodal size distribution and a volume mean diameter less than or equal to 2 µm,
- mixing said cathode material with a polymer binder, and optionally an electrically conductive agent, in a solvent, so as to form a cathode ink,
- depositing said cathode ink on a metal current collector,
- and drying said cathode ink to form a cathodic film on said current collector.
